# EUROPÄISCHE PATENTANMELDUNG

(11) **EP 4 353 111 A1**
(43) Veröffentlichungstag der Anmeldung: **17.04.2024**
(21) Anmeldenummer: 23202170.9
(22) Anmeldetag: 06.10.2023
(51) Int. Cl.: A43B 3/00, A43B 17/00, A43B 17/14, B33Y 80/00

(54) **SCHUHEINLAGE, INSBESONDERE EINE INDIVIDUELLE UND/ODER ORTHOPÄDISCHE SCHUHEINLAGE, VERFAHREN ZUM HERSTELLEN EINER SCHUHEINLAGE SOWIE COMPUTERPROGRAMMPRODUKT**

(30) Priorität: 13.10.2022 DE 102022126803
(71) Anmelder: Tausch, Christian, 72119 Ammerbuch (DE); Ring, Dominic Jason, 70736 Fellbach (DE)
(72) Erfinder: Tausch, Christian, 72119 Ammerbuch (DE); Ring, Dominic Jason, 70736 Fellbach (DE)
(74) Vertreter: Schneider, Sandra

(57) **Zusammenfassung**

Die Anmeldung betrifft eine Schuheinlage, insbesondere eine individualisierte und/oder orthopädische Schuheinlage (10), welche aus zumindest einem ersten und einem zweiten Material (2-8) in einem generativen Fertigungsverfahren hergestellt ist, wobei zumindest ein Bereich, insbesondere ein individualisierter Bereich, der Schuheinlage (10) das erste Material und das zweite Material (2-8) aufweist. Die Anmeldung betrifft weiter ein Verfahren zum Herstellen einer solchen Schuheinlage (10) und ein Computerprogrammprodukt.

## Beschreibung

### Technisches Gebiet

Die Anmeldung betrifft eine Schuheinlage, insbesondere eine individualisierte und/oder orthopädische Schuheinlage, ein Verfahren zum Herstellen einer solchen Schuheinlage sowie ein Computerprogrammprodukt.

### Hintergrund

In DE102013224142A1 wird eine Einlegesohle mit einer an die Fußform des Benutzers angepassten Form beschrieben, welche zumindest ein Polymermaterial enthält oder aus zumindest einem Polymermaterial hergestellt ist. Weiter wird ein Verfahren zur Herstellung einer Einlegesohle mit den folgenden Schritten beschrieben: Bestimmen der Fußform des Benutzers, Bestimmen und Digitalisieren der Form der Einlegesohle, Berechnen von Produktionsdaten, Ausgeben der Produktionsdaten an ein generatives Herstellungsverfahren.

In DE102016124724A1 wird eine individualisierte orthopädische Schuheinlage mit einem in einem generativen Herstellungsverfahren hergestellten Basisteil beschrieben. Das Basisteil weist einen Stützabschnitt, einen Dämpfungsabschnitt sowie einen Aufnahmeabschnitt auf. Zur individuellen Therapie kann ein Einsatzteil in den Aufnahmeabschnitt eingesetzt werden.

Es ist Aufgabe der Anmeldung, eine verbesserte Schuheinlage sowie ein verbessertes Herstellungsverfahren für eine individualisierte orthopädische Schuheinlage zu schaffen.

Diese Aufgabe wird durch eine Schuheinlage, insbesondere eine individualisierte und/oder orthopädische Schuheinlage, mit den Merkmalen des Anspruchs 1, durch ein Verfahren mit den Merkmalen des Anspruchs 9 sowie ein Computerprogrammprodukt mit den Merkmalen des Anspruchs 17 gelöst. In den abhängigen Ansprüchen sind Ausführungsformen angegeben.

### Übersicht

Eine Schuheinlage ist aus zumindest einem ersten und einem zweiten Material in einem generativen Fertigungsverfahren hergestellt. Die Schuheinlage kann z. B. eine individualisierte Schuheinlage, eine orthopädische Schuheinlage oder eine individualisierte orthopädische Schuheinlage sein. Zumindest ein Bereich, insbesondere ein individualisierter Bereich, der Schuheinlage weist das erste Material und das zweite Material auf. Das erste und das zweite Material weisen zumindest eine voneinander unterschiedliche Eigenschaft auf.

Die Schuheinlage kann weitere Materialien aufweisen. Bereiche der Schuheinlage, die die weiteren Materialien aufweisen, können ebenfalls mittels des generativen Fertigungsverfahrens hergestellt sein.

Eine orthopädische Schuheinlage dient medizinischen Zwecken zur Behandlung von Fehlbildungen und/oder Erkrankungen des Stütz- und Bewegungsapparates. Eine individualisierte Schuheinlage wird individuell für einen Nutzer, insbesondere für die individuelle Fußform des Nutzers und für individuelle Funktionsansprüche des Nutzers, gefertigt. Die Form der Einlage in Kombination mit den gewählten Materialien ist dabei individualisiert, d. h. speziell für ein Individuum, insbesondere den künftigen Nutzer der Einlage, ausgebildet. Die Individualisierung ist dabei insbesondere in Form von individualisierten Bereichen der Schuheinlage ausgebildet. Eine individualisierte orthopädische Schuheinlage wird individualisiert für den Nutzer, insbesondere für seine Fußform und gemäß des medizinischen Befunds und Behandlungszwecks angefertigt. Die Individualisierung betrifft dabei sowohl den individuellen orthopädisch medizinischen Behandlungszweck, die individuelle Fußform als auch weiter mögliche individuelle Anpassungen, z. B. zur Farbgebung.

Ein generatives Fertigungsverfahren ist ein automatisierter Prozess zur Herstellung dreidimensionaler physischer Objekte aus einem Produktionsdatensatz, z. B. einem 3D-CAD-Datensatz. Es basiert auf dem Schichtbauprinzip und kann ohne bauteilabhängige Werkzeuge auskommen. Die technische Realisierung gründet auf Schichten und wird deshalb auch als Schichtbautechnologie (engl. layer-based technology oder layered technology) oder schichtenorientierte Technologie (engl. layer-oriented technology) bezeichnet. Generative Fertigungsverfahren umfassen z. B. additive Fertigungsverfahren und/oder Verfahren, die eine Schichtbautechnologien verwenden. Als generatives Fertigungsverfahren kann z. B. 3D Druck wie FDM (engl. Fused Deposition Modelling) zum Einsatz kommen. Als generatives Fertigungsverfahren kann auch ein Spritzgussverfahren zum Einsatz kommen, bei dem Schichten additiv durch Spritzgießen hinzugefügt werden, wobei die Spritzgussform ebenfalls bauteilunabhängig ist und aus dem Produktionsdatensatz während der Fertigung ermittelbar ist und durch die Fertigungsvorrichtung unter Verwendung des Produktionsdatensatzes bereitgestellt werden kann. Hierbei können Formverfahren zum Einsatz kommen, bei denen z. B. Formen mit Schaum ausgegossen werden, z. B. durch Aufschäumen.

Das erste und das zweite Material weisen zumindest eine voneinander unterschiedliche Eigenschaft auf. Die weiteren Materialen weisen ebenfalls voneinander und von erstem und zweitem Material unterschiedliche Eigenschaften auf. Die unterschiedliche Eigenschaft oder die unterschiedlichen Eigenschaften des ersten und des zweiten Materials und die unterschiedlichen Eigenschaften der weiteren Materialien können durch das generative Fertigungsverfahren und/oder durch zumindest eine Eigenschaft eines vom generativen Fertigungsverfahren verwendeten Ausgangsmaterial erreicht werden. Die Eigenschaften der unterschiedlichen Materialien können also durch die Verwendung des Ausgangsmaterials für das generative Fertigungsverfahren, z. B. durch die Wahl eines anderen Kunststoffes oder eines anderen Werkstoffes als Ausgangsmaterial, und/oder durch das generative Fertigungsverfahren selbst erreicht werden. Bei dem generativen Fertigungsverfahren können verschiedene Eigenschaften insbesondere durch das Fertigen von Hohlräumen oder ähnlichem erzielt werden. Ein Ausgangsmaterial des generativen Fertigungsverfahrens wird dabei von dem Fertigungsverfahren verarbeitet zum Aufbau der Einlage verwendet. Durch den Vorgang des Aufbaus durch die Fertigungsvorrichtung kann das Ausgangsmaterial eine Veränderung seiner Eigenschaften erfahren, z. B. kann durch den Aufbau von Hohlräumen die Dichte und/oder Festigkeit verändert werden. Die Hohlräume können dabei insbesondere eine offene oder geschlossene Zellstruktur ausbilden.

In Ausführungsformen der Schuheinlage unterscheiden sich Eigenschaften des ersten Materials und des zweiten Materials im Hinblick auf Aussehen, Festigkeit, Steifigkeit, Härte, Dichte und/oder elektrische Leitfähigkeit voneinander. Festigkeit beschreibt die Tragfähigkeit gegen mechanische Spannungen, also die Eigenschaft, die beschreibt, wie stark etwas unter Einwirkung von Kräften hält oder bricht. Steifigkeit beschreibt den Verformungswiderstand gegen mechanische Spannungen. Härte beschreibt den Widerstand eines Materials gegenüber lokalem Eindringen.

Im Hinblick auf das Aussehen können sich unterschiedliche Materialien insbesondere in Bezug auf ihre Farbe unterscheiden. Weiterhin können die Materialen auch ESD (engl. electrostatic discharge) Eigenschaften aufweisen, was insbesondere für Einlagen im Bereich der Arbeitssicherheit von Bedeutung ist.

Der zumindest eine Bereich, insbesondere der individualisierte Bereich, kann trennscharfe Übergänge zwischen dem ersten und dem zweiten Material aufweisen, wobei die trennscharfen Übergänge durch sortenreines Addieren von erstem und zweitem Material während des generativen Fertigungsverfahrens hergestellt werden. Beim sortenreinen Addieren werden das erste und das zweite Material jeweils getrennt voneinander addiert, also aufgetragen. Ein Vermischen der Materialen erfolgt erst beim Auftragen selbst, wenn neu aufgetragenes sortenreines Material auf ein anderes Material trifft, das bereits zuvor aufgetragen wurde.

In Ausführungsformen der Schuheinlage können die Übergänge zwischen dem ersten und dem zweiten Material offenzellig sein. Mit offenzellig oder geschlossenzellig wird insbesondere Kunststoff charakterisiert, welcher eine zellförmige Struktur mit zelligen Hohlräumen aufweist. Geschlossenzellig charakterisiert dabei die Struktur mit geschlossenen Zellen, d. h. einer Struktur, wo die Wände zwischen den einzelnen Zellen komplett geschlossen sind. Offenzellig ist die Struktur, wenn die Zellwände nicht geschlossen sind. Im Bereich der Übergänge können das erste und das zweite Material also offene Zellstrukturen aufweisen. Bei der beschriebenen Schuheinlage lassen sich durch die Fertigung mittels generativer Fertigungsverfahren mit zumindest erstem und zweitem Material auch bei offenzelligen Strukturen trennscharfe Übergänge zwischen verschiedenen Materialien realisieren. Die trennscharfen Übergänge können jedoch so ausgebildet sein, dass Sie nicht spürbar sind, was den Komfort und die therapeutische Wirkung verbessern kann. Zugleich kann ermöglicht werden, dass die Einlage an den Übergängen gut zusammenhält nicht auseinanderfällt.

Die Schuheinlage kann so ausgebildet sein, dass das erste und das zweite Material nicht zerstörungsfrei voneinander trennbar sind. Das bedeutet, dass die beiden Materialien nur durch Zerstören der Schuheinlage voneinander trennbar sind.

In einer Ausführungsform der Schuheinlage weist der zumindest eine individualisierte Bereich Schriftzeichen aus dem ersten Material auf, welche in das zweite Material eingebettet sind. Mit den Schriftzeichen lässt sich eine Beschriftung der Einlage realisieren, die z. B. Namen, Barcode oder auch für Medizinprodukte vorgeschriebene Angaben umfassen können. Die Eigenschaften der beteiligten Materialien lassen sich hierfür insbesondere in Bezug auf die Farbe so geeignet wählen, dass eine gute Lesbarkeit, insbesondere hinsichtlich des Kontrasts, gewährleistet ist. Durch die trennscharfen Übergänge lässt sich z. B. eine gute Lesbarkeit der Schriftzeichen realisieren.

Der zumindest eine individualisierte Bereich kann durch eine Form und Anordnung von erstem und zweitem Material für eine individuelle Therapie ausgebildet sein. Der individualisierte Bereich für eine individuelle Therapie ist insbesondere für eine medizinische Therapie ausgebildet, welche unter Verwendung von Schuheinlagen, auch Einlegesohle, Einlagen oder Fußeinlagen genannt, durchgeführt werden kann. Durch die trennscharfen Übergänge lassen sich z. B. auch an den Übergängen genau definierte Eigenschaften mit insbesondere genau definierter Härte der zur Therapie vorgesehenen Bereiche realisieren.

Der individualisierte Bereich für die individuelle Therapie kann dabei insbesondere von dem zuvor beschriebenen individualisierten Bereich mit Schriftzeichen verschieden sein. Die Schuheinlage kann den individualisierten Bereich zur individuellen Therapie dabei zusätzlich oder alternativ zu dem individualisierten Bereich mit Schriftzeichen aufweisen. Durch die trennscharfen Übergänge lässt sich z. B. eine gute Lesbarkeit der Schriftzeichen und/oder auch an den Übergängen genau definierte Eigenschaften, insbesondere genau definierter Härte, der zur Therapie vorgesehenen Bereiche realisieren.

In Ausführungsformen kann die Schuheinlage drei oder mehr verschiedene Materialien aufweisen. Zum Beispiel kann die Schuheinlage einen ersten Bereich, welcher individualisiert sein kann, mit Schriftzeichen aufweisen, welcher zwei Materialien aufweist. Zusätzlich kann die Schuheinlage einen zweiten Bereich, welcher individualisiert sein kann, mit zwei Materialen zur Therapie aufweisen.

Zu therapeutischen Zwecken kann die Schuheinlage insbesondere mit Versteifungselementen versehen sein, die z. B. mittels des generativen Fertigungsverfahrens hergestellt werden. Versteifungselemente können auch in getrennten Fertigungsschritten hinzugefügt werden. Weiter ist es möglich, die Schuheinlage mit weiteren Einlegeteilen, z. B. zur Druckmessung und/oder weiteren Sensoren wie Schrittzählern, auszubilden. Die Einlegeteile können auch z. B. RFID Chips und/oder sonstige technische und/oder elektronische Elemente aufweisen.

Bei einem Verfahren zum Herstellen einer Schuheinlage, insbesondere einer individualisierten und/oder orthopädischen Schuheinlage, mit zumindest einem Bereich, insbesondere einem individualisierten Bereich, mit zumindest einem ersten und einem zweiten Material wird die Schuheinlage aus dem ersten und dem zweiten Material mittels eines generativen Fertigungsverfahrens hergestellt. Dabei werden sowohl das erste als auch das zweite Material durch das generative Fertigungsverfahren zu der Schuheinlage addiert, wobei die Schuheinlage Bereiche aufweist, die das erste und das zweite Material aufweisen und insbesondere individualisiert für die jeweilige Fußform und gemäß des medizinischen Befunds und des Behandlungszwecks durch das generative Fertigungsverfahren hergestellt werden.

In einer Ausführungsform des Verfahrens werden trennscharfe Übergänge des zumindest einen Bereiches, welcher individualisiert sein kann, durch sortenreines Addieren von erstem und zweitem Material während des generativen Fertigungsverfahrens hergestellt. Beim sortenreinen Addieren werden das erste und das zweite Material jeweils getrennt voneinander addiert, also aufgetragen. Ein Vermischen der Materialen erfolgt erst beim Auftragen selbst, wenn neu aufgetragenes sortenreines Material auf davon verschiedenes Material trifft, das sich bereits zuvor aufgetragen wurde.

Es wird vorgeschlagen, das erste Material durch eine erste Abgabevorrichtung einer Fertigungsvorrichtung zu addieren, also aufzutragen, und das zweite Material durch eine zweiten Abgabevorrichtung der Fertigungsvorrichtung zu addieren, also aufzutragen. Die erste und die zweite Abgabevorrichtung können durch eine gemeinsame Steuerungseinheit der Fertigungsvorrichtung angesteuert werden. Weitere Materialien können durch weitere Abgabevorrichtungen der Fertigungsvorrichtung aufgetragen werden. Auch die weiteren Abgabevorrichtungen können durch die Steuerungseinheit der Fertigungsvorrichtung angesteuert werden.

Bei den Abgabevorrichtungen kann es sich z. B. um Düsen handeln, aus denen das zum additiven Fertigen genutzte Material aufgetragen wird. Durch die Verwendung von solchen, auf jeweils ein Material dedizierten Abgabevorrichtungen, findet keine Vermischung der verwendeten Materialien vor dem Auftragen statt. Dadurch können ungewollte Mischmaterialien mit unbekannten Eigenschaften in der Einlage vermieden werden. Hierdurch kann eine hohe Wiederholgenauigkeit der Fertigung gemäß der Vorgaben erreicht werden.

Das Verfahren kann weiter die folgenden Schritte aufweisen:
A) Erfassung von individuellen Daten, insbesondere Patientendaten, Anamnese, Indikationen, Schuhtyp, Einsatzzweck
B) Automatische Ermittlung von Eigenschaften des zumindest einen Bereiches, insbesondere eines individualisierten Bereiches, der Schuheinlage unter Verwendung der individuellen Daten,
C) Generierung eines Produktionsdatensatzes und Übermittlung des Produktionsdatensatzes an die Fertigungsvorrichtung,
D) Herstellen der Schuheinlage mittels des generativen Verfahrens durch die Fertigungsvorrichtung unter Verwendung des Produktionsdatensatzes.

Zusätzlich können die in Schritt A erfassten individuellen Daten automatisiert auf Plausibilität und/oder Vollständigkeit überprüft werden. Der Produktionsdatensatz umfasst die Daten, die die Fertigungsvorrichtung benötigt, um die Schuheinlage herstellen zu können.

In einer Ausführungsform des Verfahrens werden die in Schritt B ermittelten Eigenschaften auf einer Bedieneinrichtung dargestellt und es sind über die Bedieneinrichtung Änderungen der Eigenschaften empfangbar. Optional sind dabei die über die Bedieneinrichtung empfangenen Änderungen automatisiert auf Plausibilität und/oder Vollständigkeit überprüfbar.

Das Verfahren ermöglicht damit, in Abhängigkeit von der Indikation und Anamnese die Schuheinlage mit der gewünschten therapeutischen Wirkung wiederholgenau zu erzeugen. Über die Möglichkeit, Schriftzeichen durch das Verfahren zu erzeugen, wird es erleichtert, gesetzliche Vorgaben, insbesondere im medizinischen Bereich, einzuhalten. Beispiele hierfür sind die Möglichkeit Beschriftung, Markierung, Seriennummer, Auszeichnung z. B. als "medical device" auf der Schuheinlage zu platzieren und auf Vollständigkeit und/oder Plausibilität zu überprüfen. Die Kennzeichnung kann dabei unter Einhaltung des Datenschutzes auf die gesetzlich erforderlichen Daten beschränkt werden. Durch die automatisierte Plausibilitätsprüfung und Überprüfung der Daten kann unter Einhaltung des Datenschutzes die Korrektheit des Produktionsdatensatzes überprüft werden, bevor die Schuheinlage hergestellt wird. Bei einer Fehlherstellung kann nach der Fehlererkennung und nach einer optionalen Fehlerkorrektur, z. B. durch eine Wiederholung von einem oder mehrerer der Schritte A bis D eine korrekte Einlage gefertigt werden.

Verschiedene Schritte des Verfahrens können dabei räumlich getrennt voneinander von verschiedenen Parteien durchgeführt werden.

Ein Computerprogrammprodukt enthält Anweisungen, die, wenn das Programm von einer oder mehreren Datenverarbeitungsvorrichtungen, insbesondere der Steuerungseinheit und/oder der Bedieneinrichtung, ausgeführt wird, die eine oder die mehreren Datenverarbeitungsvorrichtungen veranlassen, die Schritte des Verfahrens zum Herstellen einer Schuheinlage, insbesondere einer individualisierten und/oder orthopädischen Schuheinlage, auszuführen.

### Fiaurenliste

Ausführungsbeispiele sind in der Zeichnung dargestellt und werden in der nachfolgenden Beschreibung näher erläutert.

Es zeigen
- **Figur 1**: eine schematische Darstellung einer Aufsicht von unten auf eine erste Ausführungsform einer Schuheinlage,
- **Figur 2**: eine schematische Darstellung einer Aufsicht von unten auf eine zweite Ausführungsform der Schuheinlage,
- **Figur 3**: eine schematische Darstellung einer Aufsicht von unten auf eine dritte Ausführungsform der Schuheinlage,
- **Figur 4**: eine schematische Darstellung eines Aufbaus sowie einer Aufsicht von oben auf die erste Ausführungsform der Schuheinlage,
- **Figur 5**: eine schematische Darstellung eines Aufbaus sowie einer Aufsicht auf die Sagittalebene der ersten Ausführungsform der Schuheinlage,
- **Figur 6**: eine schematische Darstellung eines Aufbaus sowie einer Aufsicht auf die Sagittalebene der zweiten Ausführungsform der Schuheinlage,
- **Figur 7**: eine schematische Darstellung eines Aufbaus sowie einer Aufsicht auf die Frontalebene der ersten Ausführungsform der Schuheinlage,
- **Figur 8**: eine schematische Darstellung eines Aufbaus sowie einer Aufsicht auf die Frontalebene der zweiten Ausführungsform der Schuheinlage,
- **Figur 9**: eine schematische Darstellung eines Verfahrens zum Herstellen einer solchen Schuheinlage und
- **Figur 10**: eine schematische Darstellung einer Bedienoberfläche einer Bedieneinrichtung.

Es werden in den Figuren die gleichen Bezugszeichen für gleiche oder ähnliche Elemente verwendet. Die Darstellung in den Figuren muss nicht maßstäblich sein.

### Figurenbeschreibung

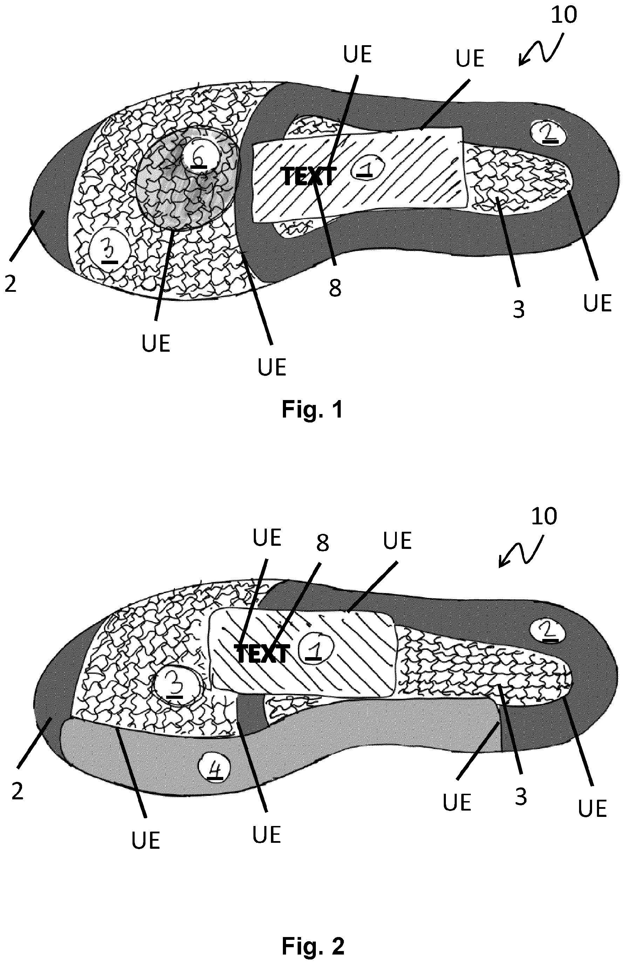

Figur 1 zeigt eine schematische Darstellung eines Aufbaus einer ersten Ausführungsform einer individualisierten orthopädischen Schuheinlage 10. Die Schuheinlage 10 weist verschiedene Materialien 2, 3, 6, 8 auf. Verschiedene Materialien 2, 3, 6, 8 weisen dabei verschiedene Eigenschaften auf, welche z. B. durch unterschiedliche Ausgangsmaterialien im Produktionsverfahren und/oder durch das Produktionsverfahren selbst, z. B. durch die Formgebung, erreicht werden können. Es ist ein Schriftfeld 1 vorgesehen, welches Zeichen aus einem Material 8 auf weisen kann. Der Bereich des Schriftfeldes 1 ist insbesondere durch die Schriftzeichen aus dem Material 8 individualisierbar. Durch die Schriftzeichen kann die Schuheinlage 10 eine individuelle Kennung aufweisen. Die Form des Schriftfeldes 1 ist dabei frei wählbar. Der Bereich mit dem Schriftfeld 1 kann dabei durch eine individuelle Wahl der Schriftzeichen individualisiert sein. Im in Figur 1 dargestellten Beispiel grenzt das Material 8 - je nach Wahl des Ortes der Schriftzeichen - entweder an das Material 2 und/oder an das Material 3 an. Das Material 8 ist bevorzugt so gewählt, dass der Kontrast zu den angrenzenden Materialien 2, 3 groß genug ist, damit die Schriftzeichen lesbar sind.

In Ausführungsbeispielen kann das Schriftfeld auch in einem eigenen Material, welches sich insbesondere in Bezug auf die Farbe von den anderen Materialien 2-8 unterscheidet, ausgebildet sein. In solchen Ausführungsbeispielen würden die Schriftzeichen aus dem Material 8 dann an das eigene Material des Schriftfeldes angrenzen und trennscharfe Übergänge UE ausbilden. Eine solche Ausgestaltung des Schriftfeldes ist für alle Ausführungsbeispiele in allen Figuren möglich.

Das Material 3 ist beispielsweise ein Material mit lockerer Struktur zur Definition der Härte der Schuheinlage 10 sowie zur Anpassung des Gewichts der Schuheinlage 10. Die lockere Struktur lässt sich z. B. bei der Fertigung der Einlage 10 durch das Einfügen von Hohlräumen oder mehr Hohlräumen und/oder größere Hohlräume realisieren. Die Hohlräume können insbesondere als offenzellige oder geschlossenzellige Struktur aufgebaut sein. Bei der Fertigung, insbesondere durch ein generatives Fertigungsverfahren, können die Zellen z. B. durch den Aufbau von Wänden um Hohlräume, also Gas aufweisende Bereiche, herum entstehen. Auch durch die Größe der Zellen lässt sich die Struktur beeinflussen. Größere durch Zellen umschlossene Hohlräume können z. B. zu einer lockereren Struktur führen.

Das Material 2 ist ein kompaktes dichtes Material zur Verstärkung der Schuheinlage 10, zum Beispiel im Außenbereich der Einlage 10. Die kompakte Struktur lässt sich z. B. bei der Fertigung der Einlage 10 durch das Einfügen von wenigen oder keinen Hohlräumen realisieren. Die Übergänge UE vom Material 2 zu anderen Materialien können deshalb geschlossen sein und Wände aufweisen. Das in Figur 1 dargestellte Ausführungsbeispiel weist eine Intarsie aus dem Material 6 auf. Das Material 6 weist zum Beispiel eine andere Härte als das Material 3 auf und/oder das Material 2 auf. Durch eine geeignete Wahl z. B. der Härte des Materials 6 kann durch die Intarsie eine Therapiewirkung erzielt werden.

Eine Intarsie ist ein in die Schuheinlage eingearbeiteter Bereich, in beliebiger, z. B. runder, ovaler, elliptischer, quadratischer, dreieckiger Form. Das Material 6 der Intarsie kann z. B. Hohlräume aufweisen und damit von lockerer Struktur sein. Mit einer solchen Intarsie lassen sich z. B. medizinisch-orthopädische Wirkungen erzielen. Die Intarsie kann auch hart, also mit hartem Material, ausgeführt sein. Insbesondere kann die Härte der Intarsie individuell auf den Nutzer abgestimmt sein. Die Härte der Intarsie kann auch auf orthopädische Bedürfnisse abgestimmt sein.

Zwischen den jeweiligen verschiedenen Materialien 2, 3, 6, 8 kann die Schuheinlage 10 trennscharfe Übergänge UE aufweisen. Unter trennscharfem Übergang UE wird vorliegend verstanden, dass während der Herstellung der Einlage 10 zwei verschiedene Materialien ohne vorherige Vermischung aufgetragen werden. Beim Auftragen eines Materials auf ein zuvor aufgetragenes anderes Material während des Additionsvorgangs kann es zu einer Verschmelzung der beiden Materialien im Randbereich, also im Übergangsbereich zwischen den beiden Materialien, kommen. Diese Bereiche sind im Vergleich zur Einlage 10 so klein, dass sie vorliegend als trennscharf bezeichnet werden. Dies hat den Vorteil, dass an den Übergängen UE eine Vermischung der Materialien minimal bleibt, so das einzelnen Bereichen der Einlage 10 wohldefinierte bekannte Eigenschaften des Materials zuzuordnen sind. Es erfolgt keine Vermischung von Materialien, denen dann keine definierte Eigenschaft mehr zugeordnet werden kann. Dies ist besonders wichtig z. B. für Medizinprodukte. Des weiteren ist eine Umsetzung so möglich, dass an den Übergängen UE keine Grenzen oder Trennungen spürbar sind. Dies ist zum Beispiel beim Drücken mit dem Finger auf den Übergang festzustellen.

Das Einlegen verschiedener Elemente in die orthopädische und/oder individualisierte Einlage / Schuheinlage ist auch möglich. Hierbei kann es sich um Sensoren, Aktoren, Heizung, Akku, elektronische Platinen u. ä. handeln. Hierfür können entsprechende Plätze zum späteren Einbau vorgesehen werden oder diese können direkt fest umschlossen mitverbaut werden. Dies kann auch durch Auswahl und Platzierung in dem Produktionsdatensatz geschehen.

Die Einlage 10 kann unterschiedliche Bereiche aufweisen, welche individualisiert sein können. Individualisierte Bereiche können z. B. Polsterelemente wie Intarsien oder Versteifungselemente wie z.B. eine Rigidusfeder aufweisen. Diese werden mittels des generativen Verfahrens z. B. aus anderen und voneinander verschiedenen Ausgangsmaterialien gefertigt. Durch die Fertigung können in gleicher Weise wie für den Rest der Einlage 10 Eigenschaften weiter beeinflusst werden. Versteifungselemente können z. B. als Rigidusfeder, Detorsionsversteifung, Sohlenversteifung und/oder Rückfußversteifung oder ähnlichem ausgebildet sein. Eine Rigidusfeder ist dabei ein Versteifungselement zur therapeutischen Behandlung eines Hallux Rigidus. Die Einlage 10 ist damit eine orthopädische Einlage 10.

Figur 2 zeigt eine zweite Ausführungsform der individualisierten orthopädischen Schuheinlage 10. Die Einlage 10 aus Figur 2 weist ein Versteifungselement, z. B. eine Rigidusfeder, aus einem Material 4 auf. Das Material 4 ist ein festeres Material mit wenigen oder keinen Hohlräumen. Die Übergänge UE vom Material 4 zu anderen Materialien können deshalb geschlossen sein und Wände aufweisen. Die Einlage 10 ist durch den Bereich mit dem Material 4 individualisierbar und/oder auf orthopädische Bedürfnisse abstimmbar.

Die in Figur 2 dargestellte Schuheinlage 10 weist also verschiedene Materialien 2, 3, 4, 8 auf. Auch die Übergänge UE des Materials 4 zu den anderen Materialien 3, 2 sind trennscharf.

Die Einlage 10 weist das Schriftfeld 1 auf, welches die Schriftzeichen aus dem Material 8 zu einer individuellen Kennung der Schuheinlage 10 aufweisen kann. Die Einlage 10 ist dadurch individualisierbar. Die Form des Schriftfeldes 1 ist frei wählbar. Im in Figur 2 dargestellten Beispiel grenzt das Material 8 - je nach Wahl des Ortes der Schriftzeichen - entweder an das Material 2, das Material 3 und/oder an das Material 4 an. Das Material 8 ist bevorzugt so gewählt, dass der Kontrast zu den angrenzenden Materialien 2, 3, 4 groß genug ist, damit die Schriftzeichen lesbar sind.

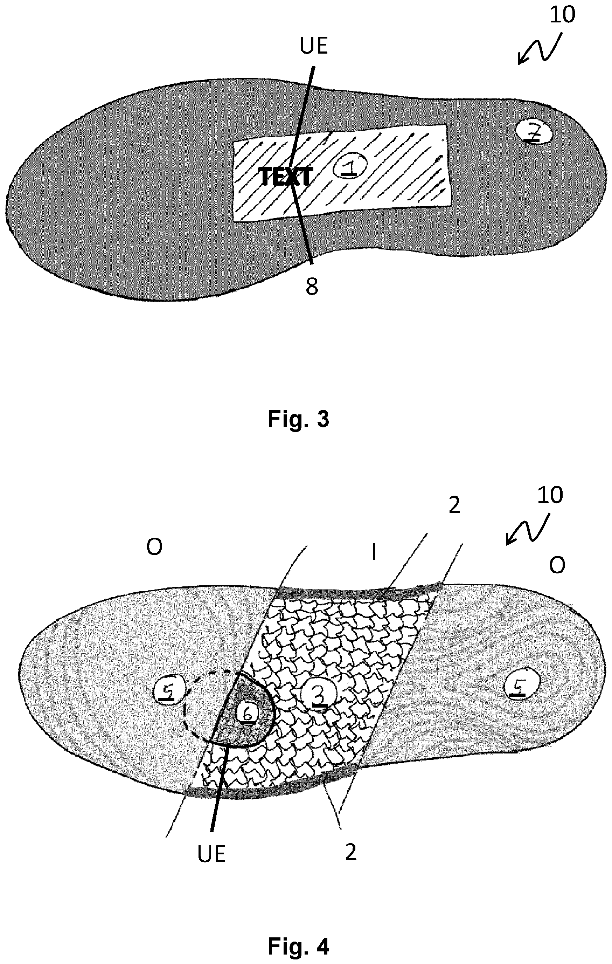

Figur 3 zeigt die Aufsicht von unten auf eine Ausführungsform der Schuheinlage 10. Die Unterseite der Einlage 10 weist eine Form auf, die von dem Schuh abhängt, in dem die Einlage 10 verwendet werden soll. Unten, also an der beim Tragen der Schuheinlage 10 in einem Schuh dem Fuß des Nutzers abgewandten Seite, weist die Einlage 10 eine untere Deckschicht aus einem Material 7 auf. Die untere Deckschicht ist in dem in Figur 3 dargestellten Ausführungsbeispiel geschlossen. Die untere Deckschicht kann auch offen gestaltet sein. Eine offene untere Deckschicht lässt Bereiche frei, so dass bei einer offenen unteren Deckschicht in den offenen Bereichen von unten z. B. das Material 2 oder 3 zu sehen ist. In Figur 3 ist der Schriftbereich 1 sichtbar. Schriftzeichen in diesem Bereich sind als Material 8 in Material 7 sichtbar. Der Übergangsbereich UE ist so trennscharf, dass die Schriftzeichen gut lesbar sind. Zugleich sind die Materialien 7 und 8 so verbunden, dass die Schrift nicht entfernt und/oder verändert werden kann, ohne die Einlage 10 zu zerstören.

Die Ausführungsbeispiele, die in Figur 1 und 2 gezeigt sind, weisen keine untere Deckschicht auf. Optional können die in Figur 1 und 2 gezeigten Ausführungsbeispiele eine offene oder geschlossene untere Deckschicht aufweisen.

Figur 4 zeigt eine schematische Darstellung einer Aufsicht von oben eines Aufbaus im Innenbereich I der Schuheinlage 10 sowie einer Aufsicht von oben auf einen Außenbereich O der ersten Ausführungsform der Schuheinlage 10. Oben, also an der beim Tragen der Schuheinlage 10 in einem Schuh dem Fuß des Nutzers zugewandten Seite, weist die Einlage 10 eine obere Deckschicht aus einem Material 5 auf. Die obere Deckschicht ist in dem in Figur 4 dargestellten Ausführungsbeispiel geschlossen. Die obere Deckschicht kann auch offen gestaltet sein. Eine offene obere Deckschicht lässt Bereiche frei, so dass bei einer offenen oberen Deckschicht in den offenen Bereichen von oben z. B. das Material 2 oder 3 zu sehen ist. Die obere Deckschicht aus dem Material 5 kann mittels des generativen Fertigungsverfahrens gefertigt werden. Auf der oberen Deckschicht kann optional ein Bezug angebracht sein (nicht dargestellt). Der Bezug kann zum Beispiel aus Textil, Mikrofaser oder Leder sein. Bei einer offenen oberen Deckschicht ist der Bezug dann in den offenen Bereichen mit anderen Materialien als Material 5, also z. B. Material 2 oder 3 in Kontakt.

In der Ausführungsform von Figur 4 ist weiter das Material 3 in lockerer, leichter Ausführung sowie die Intarsie aus dem Material 6 zu sehen. An den Rändern weist die Einlage 10 kompaktes, dichtes Material 2 zur Verstärkung auf. Die Einlage 10 weist trennscharfe Übergänge UE z. B. zwischen den Materialien 2, 3, 5, 6 auf.

In allen dargestellten Ausführungsformen sind die obere und untere Deckschicht optional.

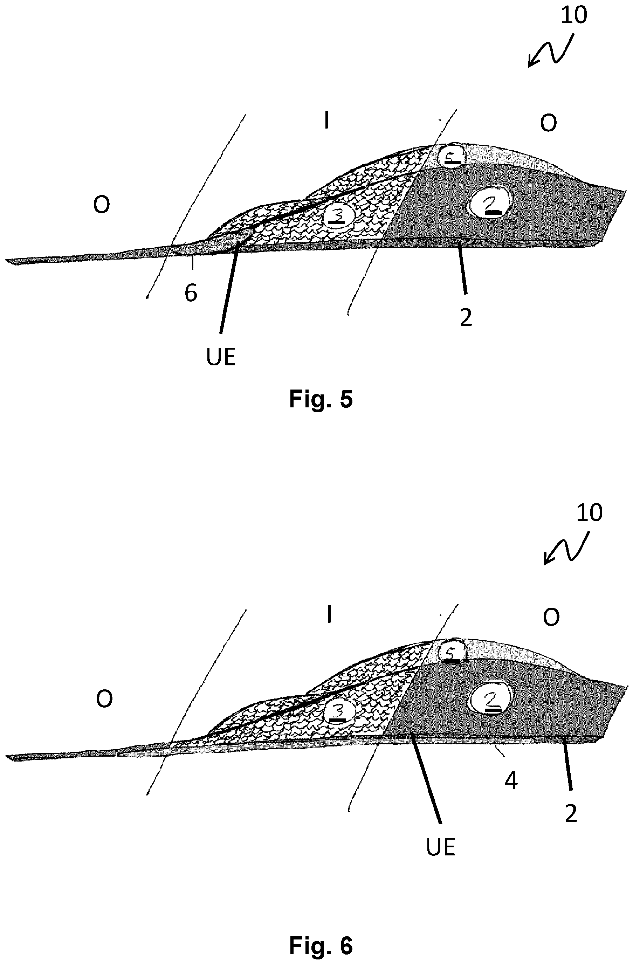

Figur 5 zeigt eine schematische Darstellung eines Aufbaus in der Sagittalebene der Schuheinlage 10 im Innenbereich I sowie einer Aufsicht auf die Sagittalebene der Schuheinlage 10 im Außenbereich O. Die Schuheinlage 10 weist eine Intarsie aus dem Material 6 im Bereich mit dem Material 3 auf. Die Materialien 3 und 6 weisen dabei einen trennscharfen Übergang UE auf. Im Außenbereich O ist die Verstärkung aus dem Material 2 sowie die obere Deckschicht aus dem Material 5 auf der Oberseite dargestellt.

Als Sagittalebene wird in der Anatomie eine Ebene bezeichnet, die sich von oben nach unten wie von hinten nach vorne erstreckt. Die Sagittalebene teilt einen Körper in einen rechten und einen linken Anteil.

In Figur 6 ist der Aufbau der Einlage 10 im Innenbereich I in der Sagittalebene dargestellt. Im Außenbereich O ist eine Aufsicht auf die Sagittalebene der Einlage 10 dargestellt. Die dargestellte zweite Ausführungsform der Einlage 10 weist ein Versteifungselement, z. B. eine Rigidusfeder, aus dem Material 4 auf. Das Versteifungselement aus dem Material 4 weist dabei trennscharfe Übergänge UE zu Material 3 sowie zu Material 2 auf.

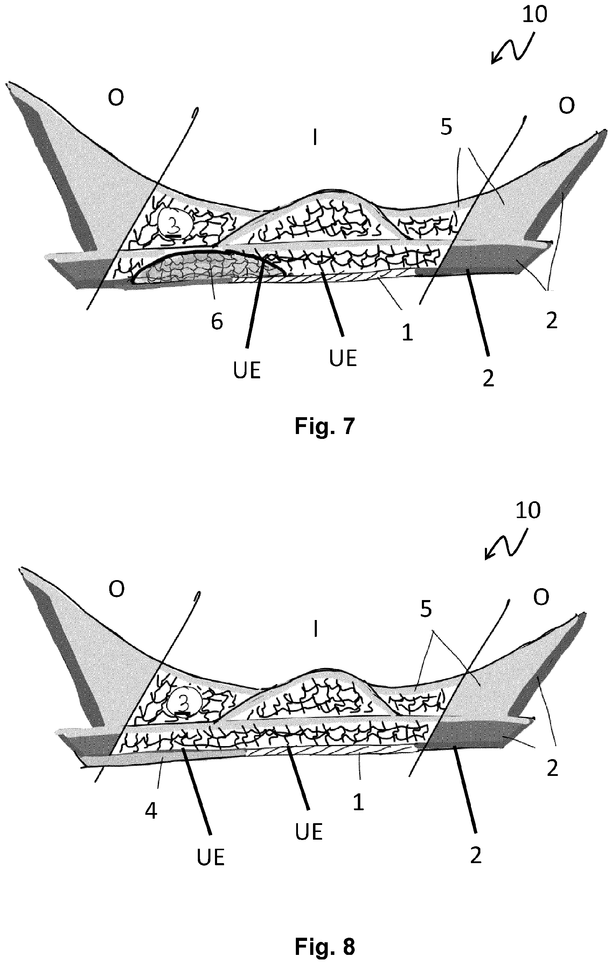

Figur 7 zeigt eine schematische Darstellung des Aufbaus der ersten Ausführungsform der Einlage 10 im Innenbereich I in der Aufsicht auf die Frontalebene der Schuheinlage 10 sowie eine Aufsicht auf die Frontalebene im Außenbereich O der Schuheinlage 10. In dieser Darstellung ist das Schriftfeld 1, sowie die Intarsie aus dem Material 6 dargestellt. Außerdem ist der Bereich aus dem Material 3, sowie die Verstärkung aus dem Material 2 dargestellt. Die Schuheinlage 10 weist eine obere Deckschicht aus dem Material 5 auf.

Figur 8 zeigt eine schematische Darstellung eines Aufbaus im Innenbereich I in einer Sicht auf die Frontalebene der Schuheinlage 10 sowie eine Aufsicht auf die Frontalebene der Schuheinlage 10 im Außenbereich O. In der dargestellten zweiten Ausführungsform ist ein Versteifungselement, z. B. eine Rigidusfeder, aus dem Material 4 vorgesehen. Weiter dargestellt ist das Schriftfeld 1 sowie der Bereich aus dem Material 3. In den Außenbereichen O sind Verstärkungen aus dem Material 2 vorgesehen. Die Einlage 10 weist weiter die obere Deckschicht aus dem Material 5 auf. Ebenfalls dargestellt sind die Übergänge UE zwischen den verschiedenen Materialien.

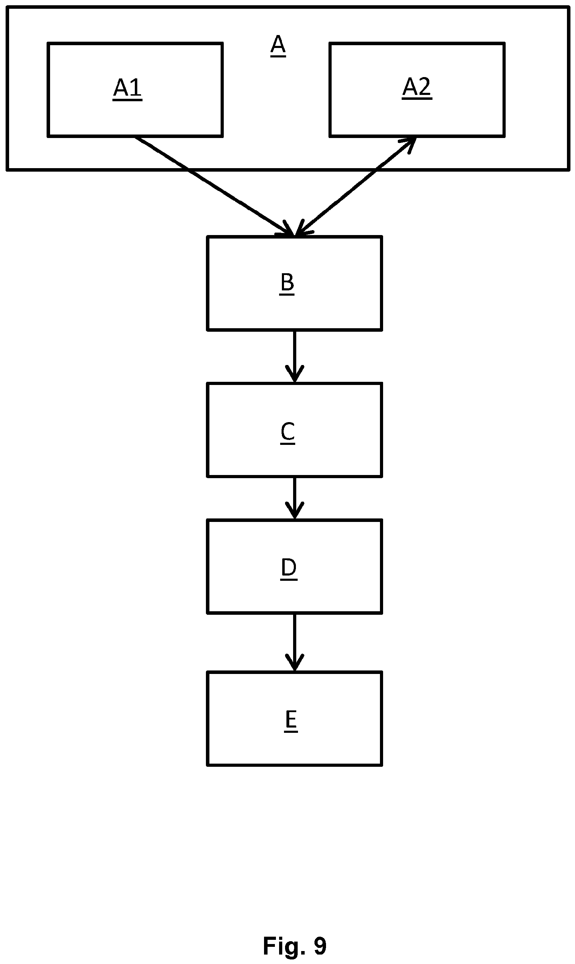

Figur 9 zeigt eine schematische Darstellung eines Verfahrens zum Herstellen einer solchen Schuheinlage.

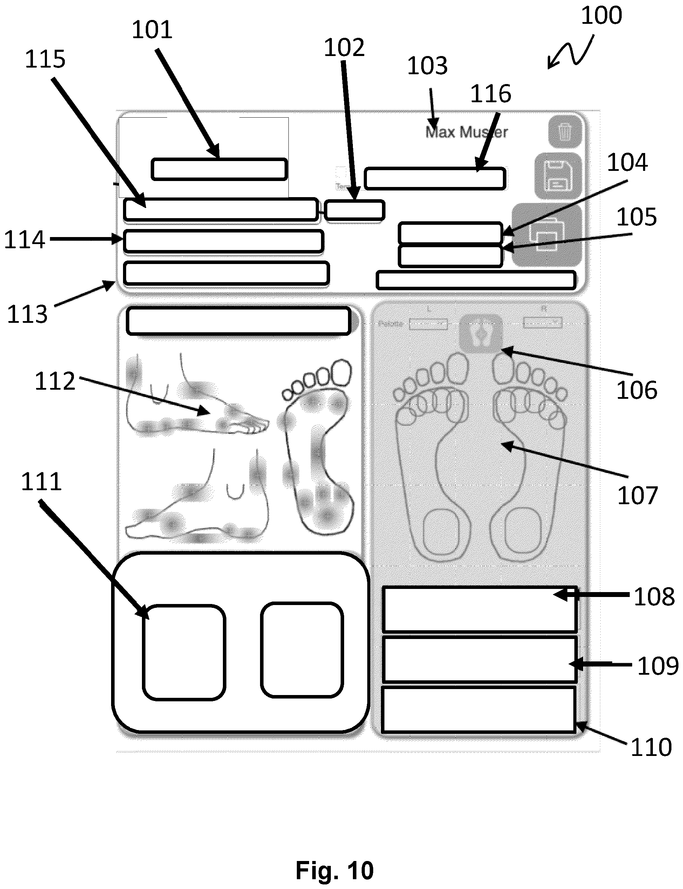

In Schritt A erfolgt die Erfassung der individuellen Daten. Die Erfassung erfolgt z. B. über eine Bedieneinrichtung 100 über eine Bedienoberfläche, wie sie beispielhaft in Figur 10 dargestellt ist. Die Datenerfassung kann z. B. durch einen Anwender, wie z. B. Ärzte, Physiotherapeuten, Gesundheitshandwerker, Orthopädieschuhmacher und/oder Schuhtechniker, erfolgen.

In Schritt A1 wird die Fußform erfasst. Dies kann z. B. über einen 3D Scanner, einen 2D Scanner, Trittschaum oder mittles Foto geschehen.

In Schritt A2 werden die Nutzerdaten, z. B. Patientendaten, erfasst. Dies kann z. B. über eine Bedienoberfläche einer Bedieneinrichtung 100 erfolgen. Es kann z. B. die Anamnese erfolgen und/oder z. B. Indikationen, Schuhtyp, Einsatzzweck erfasst werden. Hier erfolgt auch eine Warnung bei Fehlen von erforderlichen Daten. In diesem Schritt können optional die Materialien für die Schuheinlage 10 gewählt werden. Für die Schriftzeichen kann die Materialauswahl dahingehend eingeschränkt sein, dass sie nur basierend auf kontrastreichen Vorschlägen erfolgen kann, die eine hohe Sichtbarkeit gewährleisten.

In Schritt B erfolgt eine automatische Ermittlung von Eigenschaften des zumindest einen individualisierten Bereiches der Schuheinlage 10 unter Verwendung der individuellen Daten.

Die Auswahl der Materialien kann z. B. auch automatisiert anhand der z. B. in Schritt A bereits erfassten Daten in Schritt B vorgenommen werden. Die automatisierte Wahl kann auch über die Bedieneinrichtung 100 ausgegeben werden und durch den Bediener optional verändert werden. Auch für diese Änderungen kann ein automatischer Check der Zulässigkeit und/oder Plausibilität erfolgen.

In Schritt B wird ein Vorschlag anhand der Anamnese für die Gestaltung der orthopädischen Einlage erzeugt. Dies kann z. B. in Echtzeit geschehen. Über die Bedieneinrichtung 100 kann dieser Vorschlag an den Bediener ausgegeben werden. Dieser kann den Vorschlag überprüfen und bei Bedarf verändert. Auch für diese Änderungen kann ein automatischer Check der Zulässigkeit und/oder Plausibilität erfolgen.

In Schritt C erfolgt die automatische Generierung des Produktionsdatensatzes und die Übermittlung des Produktionsdatensatzes an die Fertigungsvorrichtung.

Die Schritte B und C können auch gemeinsam in einem Schritt erfolgen.

In Schritt D erfolgt die Herstellung der Einlage 10 anhand des Produktionsdatensatzes durch die Fertigungsvorrichtung.

In Schritt E erfolgen abschließende Arbeiten, wie z. B. ein optionales Beziehen der Einlage 10 mit dem Bezug und eine Auslieferung an den Nutzer, für den die Einlage 10 individualisiert hergestellt wurde.

Hierbei sind die jeweiligen Schritte standortunabhängig und können auch räumlich getrennt erfolgen. Insbesondere können zumindest Teile des Verfahrens auch in der Cloud ausgeführt werden. Eine Zuordnung der Daten erfolgt dabei durch geeignete Verfahren, z. B. kryptographische Verfahren.

Durch das Verfahren sind alle Herstellungsschritte der Schuheinlage 10 nachverfolgbar, was insbesondere für Medizinprodukte von besonderer Bedeutung ist. Eine mittels des Verfahrens hergestellte Schuheinlage 10 ist selbst dann reproduzierbar, wenn der Produktionsdatensatz verloren geht. Aus den individualisierten Daten des Nutzers kann der Produktionsdatensatz neu erzeugt werden.

Auch ist es möglich, dass Schritte des Verfahrens von unterschiedlichen Akteuren ausgeführt werden. Dies ermöglicht neben der räumlichen Trennung eine Dezentralisierung von Schritten und damit eine standortunabhängige Versorgung des Nutzers, z. B. Patienten. Dies kann z. B. bei Reisen von Bedeutung sein.

Figur 10 zeigt eine schematische Darstellung der Bedienoberfläche der Bedieneinrichtung 100. Über diese Benutzeroberfläche kann der Bediener dann individualisierte Daten, die zur Therapie des Nutzers, z. B. Patienten, zu erfassen sind, eingeben.

Über das Feld 101 kann z. B. eine Auftragsnummer oder MD SN Nummer eingegeben oder - falls vom Verfahren automatisch generiert - zur Information des Bedieners ausgegeben werden. Die Schuhgröße des Nutzers der Einlage 10 kann über das Feld 102 eingegeben werden. Der Bereich 103 ermöglicht die Eingabe von Nutzerdaten wie z. B. Name und/oder Geburtsdatum. Über diese Daten kann auch eine Verbindung zu vorherigen Aufträgen/Anfertigungen des gleichen Nutzers hergestellt werden. In Feld 116 kann als Datumsfeld ausgestaltet sein, in dem z. B. das Datum zum Zeitpunkt der Datenerfassung und/oder das Datum der geplanten Fertigstellung und/oder Auslieferung eingegeben werden kann.

Über die Felder 104 und 105 kann eine Farbauswahl für die Materialien 2 bis 8 und ggf. die beliebigen weiteren Materialien getroffen werden, wobei durch eine automatische Überprüfung insbesondere für die Farbauswahl für die Schriftzeichen aus Material 8 auf einen ausreichend großen Kontrast geachtet wird. Auch kann durch die Farbauswahl z. B. ein charakteristisches farbliches Aussehen z. B. nach Firmenrichtlinien erreicht werden.

Der Bereich 107 zeigt den automatisch erstellten Vorschlag zur Ausgestaltung der Einlage 10 mit individualisierten Bereichen zur Therapie anhand der über die Anamnese 111, 112 erfassten individualisierten Daten zu Beschwerden/Indikationen. Die Platzierung der verschiedenen Zonen, z. B. Härtebereiche, Intarsie, Versteifung, wird in Feld 107 visualisiert. Über das Bedienfeld 106 kann der Bereich 107 editiert werden, um manuelle Modifikationen als Ergänzung zum automatisch erstellten Vorschlag vorzunehmen.

Feld 108 bietet die Möglichkeit, manuell einen Text zur Anamnese einzugeben. Feld 109 bietet die Möglichkeit, manuell einen Text zur Ausgestaltung der Einlage 10 einzugeben. Feld 110 zeigt einen automatisch generierten Empfehlungstext z. B. zu weiteren therapeutischen Maßnahmen, welcher manuell änderbar ist. Weitere therapeutische Maßnahmen können z. B. schuhtechnischer Art sein, Empfehlungen zum Aufsuchen eines Physiotherapeuten und/oder Arztes etc.

Über das Anamnesetool 112 können Beschwerden und/oder Indikationen, welche z. B. über ein Gespräch mit dem Nutzer ermittelt wurden, über eine Auswahl der Punkte ausgewählt werden. Über die Punkte können gezielt schmerzende Stellen und Fehlstellungen, also Indikationen, ausgewählt werden. Über das Bedienfeld 111 kann eine Auswahl der Stärke und/oder Ausprägung der Beschwerden und/oder Indikationen bezogen auf die Seiten links und rechts erfolgen. Für links und rechts sind hier auch unterschiedliche Werte möglich.

Anhand der Auswahl der Beschwerden im Anamnesetool 112 werden Vorschläge zur Gestaltung der Einlage 10 erstellt und im Bereich 107 angezeigt. Nach manueller Modifikation kann eine Warnung erfolgen. Somit kann ein versehentliches Ändern vermieden werden.

Über das Feld 113 kann der Bezug der Einlage 10 eingegeben werden. Über das Feld 114 kann die Art der Einlage 10 angegeben oder ausgewählt werden. Die Art der Einlage kann z. B. eine Bettungseinlage, eine stützende Einlage, eine korrigierende und/oder eine Schaleneinlage sein. Über das Feld 115 kann die Schuhform angegeben werden. Schuhformen können z. B. Sportschuhe, Freizeitschuhe, elegante Schuhe, Gesundheitsschuhe oder orthopädische Schuhe sein.

Unter Verwendung der in Schritt A2 über die Bedienoberfläche erfassten individualisierten Daten wird in Schritt B die Ausgestaltung der Einlage für die Therapie ermittelt. Diese wird im Bereich 107 der Bedienoberfläche dargestellt, um dem Bediener die Möglichkeit der Änderung zu geben. Danach wird in Verknüpfung mit den in Schritt A1 erfassten Daten des digitalen Abbilds des Fußes die Ausgestaltung der Einlage 10 für die Therapie mit den individualisierten Bereichen in ihrer Form dem Fuß des Nutzers angepasst. Hier findet auch die korrekte Platzierung der individualisierten Bereiche statt, die mit einem anderen Material gefertigt werden sollen. Die Einlage 10 nimmt in diesem Schritt also ihre Form unter Verwendung der Daten von Schritt A1 und Schritt A2 an. Ebenso findet in Schritt B die Platzierung der Beschriftung durch Material 1 und 8 statt. Die Beschriftung ist im Grundsatz frei wählbar, muss jedoch insbesondere für ein Medizinprodukt den gesetzlichen Bestimmungen genügen.

Danach wird Schritt C der Produktionsdatensatz erzeugt. Dieser wird von der Fertigungsvorrichtung zur Herstellung der orthopädischen Schuheinlage 10 verwendet. Es werden Daten, z. B. ein Maschinencode und/oder ein CAD Modell, erzeugt, die die Maschine zur Fertigung benötigt, und an die Fertigungsmaschine gesendet.

Das Verfahren weist außerdem Kontrollmechanismen auf, um eine Übertragung des Produktionsdatensatzes and die Fertigungsmaschine zu überprüfen. Hierbei können die Daten z. B. überprüft werden, ob sie die minimal nötigen Daten umfassen oder ob sie z. B. vollständig sind. Nach der Fertigung der Einlage 10 wird über eine weitere Kontrollschleife geprüft, ob die Fertigung erfolgreich war. Bei z.B. Fehlfertigung ist es möglich, die orthopädische Schuheinlage 10 noch einmal zu fertigen.

Während des gesamten Vorgangs ist für den Nutzer, z.B. Orthopädieschuhmacher -techniker, z. B. über eine weitere Bedienoberfläche der Bedienvorrichtung, ersichtlich, in welchem Verfahrensschritt sich die Produktion befindet. Die Produktion ist somit nachverfolgbar. Hierbei sind auch Dokumentationen möglich, die z. B. gesetzlich für Medizinprodukte vorgeschrieben sind, z.B. mit jeweils welcher Charge von jeweils welchem Material die orthopädische Schuheinlage 10 hergestellt wurde.

## Patentansprüche

1. Schuheinlage (10), insbesondere individualisierte und/oder orthopädische Schuheinlage, welche aus zumindest einem ersten und einem zweiten Material (2-8) in einem generativen Fertigungsverfahren hergestellt ist, wobei zumindest ein Bereich, insbesondere ein individualisierter Bereich, der Schuheinlage (10) das erste Material und das zweite Material (2-8) aufweist, wobei das erste und das zweite Material zumindest eine unterschiedliche Eigenschaft aufweisen.

2. Schuheinlage nach Anspruch 1, wobei die zumindest eine unterschiedliche Eigenschaft des ersten und des zweiten Materials (2-8) durch das generative Fertigungsverfahren und/oder durch zumindest eine Eigenschaft eines vom generativen Fertigungsverfahren verwendeten Ausgangsmaterial erreicht wird.

3. Schuheinlage nach Anspruch 2, wobei sich die zumindest eine Eigenschaft des ersten und es zweiten Materials (2-8) im Hinblick auf Farbe, Festigkeit, Steifigkeit, Härte, Dichte und/oder elektrische Leitfähigkeit voneinander unterscheidet.

4. Schuheinlage nach einem der vorhergehenden Ansprüche, wobei der zumindest eine Bereich, insbesondere der zumindest eine individualisierte Bereich, trennscharfe Übergänge (UE) zwischen dem ersten und dem zweiten Material (2-8) aufweist, wobei die trennscharfen Übergänge (UE) durch sortenreines Addieren von erstem und zweitem Material (2-8) während des generativen Fertigungsverfahrens hergestellt werden.

5. Schuheinlage nach einem der vorhergehenden Ansprüche, wobei der zumindest eine Bereich, insbesondere der zumindest eine individualisierte Bereich, Übergänge (UE) zwischen dem ersten und dem zweiten Material (2-8) aufweist, welche offenzellig sind.

6. Schuheinlage nach einem der vorhergehenden Ansprüche, wobei das erste und das zweite Material (2-8) nur durch Zerstören der Schuheinlage (10) voneinander trennbar sind.

7. Schuheinlage nach einem der vorhergehenden Ansprüche, wobei der zumindest eine individualisierte Bereich zumindest ein Schriftzeichen aus dem ersten Material (8) aufweist, welches in das zweite Material (2-7) eingebettet ist.

8. Schuheinlage nach einem der vorhergehenden Ansprüche, wobei der zumindest eine individualisierte Bereich durch eine Form und Anordnung von erstem und zweitem Material (2-8) für eine individuelle Therapie ausgebildet ist.

9. Verfahren zum Herstellen einer Schuheinlage, insbesondere einer individualisierten und/oder orthopädischen Schuheinlage, aus zumindest einem ersten und einem zweiten Material (2-8) mittels eines generativen Fertigungsverfahrens, wobei die Schuheinlage zumindest einen Bereich, insbesondere einen individualisierten Bereich, mit dem ersten Material und dem zweiten Material (2-8) aufweist.

10. Verfahren nach Anspruch 9, wobei trennscharfe Übergänge (UE) zwischen dem ersten und dem zweiten Material durch sortenreines Addieren von erstem und zweitem Material (2-8) während des generativen Fertigungsverfahrens hergestellt werden.

11. Verfahren nach Anspruch 10, wobei das erste Material (2-8) durch eine erste Abgabevorrichtung einer Fertigungsvorrichtung addiert wird und das zweite Material (2-8) durch eine zweiten Abgabevorrichtung der Fertigungsvorrichtung addiert wird, welche insbesondere durch eine gemeinsame Steuerungseinheit der Fertigungsvorrichtung angesteuert werden.

12. Verfahren nach Anspruch 11, wobei jedes weitere Material durch eine jeweils weitere Abgabevorrichtung der Fertigungsvorrichtung addiert wird, wobei die Abgabevorrichtungen insbesondere durch eine gemeinsame Steuerungseinheit der Fertigungsvorrichtung angesteuert werden.

13. Verfahren nach einem der Ansprüche 9 bis 12, weiter aufweisend:
A) Erfassung von individuellen Daten,
B) Automatische Ermittlung von Eigenschaften des zumindest einen individualisierten Bereiches der Schuheinlage (10) unter Verwendung der individuellen Daten,
C) Generierung eines Produktionsdatensatzes und Übermittlung des Produktionsdatensatzes an die Fertigungsvorrichtung,
D) Herstellen der Schuheinlage (10) mittels des generativen Verfahrens durch die Fertigungsvorrichtung unter Verwendung des Produktionsdatensatzes.

14. Verfahren nach Anspruch 13, wobei die in Schritt A erfassten individuellen Daten auf Plausibilität und/oder Vollständigkeit überprüft werden.

15. Verfahren nach Anspruch 13 oder 14, wobei die in Schritt B ermittelten Eigenschaften auf einer Bedieneinrichtung (100) dargestellt werden und über die Bedieneinrichtung (100) Änderungen der Eigenschaften empfangbar sind.

16. Verfahren nach Anspruch 15, wobei die über die Bedieneinrichtung (100) empfangenen Änderungen automatisiert auf Plausibilität und/oder Vollständigkeit überprüft werden.

17. Computerprogrammprodukt mit Anweisungen, die, wenn das Programm von einer oder mehreren Datenverarbeitungsvorrichtungen, insbesondere der Steuerungseinheit und/oder der Bedieneinrichtung, ausgeführt wird, die eine oder die mehreren Datenverarbeitungsvorrichtungen veranlassen, die Schritte des Verfahrens nach einem der Ansprüche 9 bis 16 auszuführen.
